# EUROPEAN PATENT APPLICATION

(11) **EP 4 657 818 A1**
(43) Date of publication of application: **03.12.2025**
(21) Application number: 24752721.1
(22) Date of filing: 29.01.2024
(51) Int. Cl.: H04L 41/28, H04L 9/40

(54) **ACCESS CONTROL METHOD AND APPARATUS BASED ON CLOUD COMPUTING TECHNOLOGY**

(30) Priority: 09.02.2023 CN 202310100829; 24.05.2023 CN 202310594201
(71) Applicant: Huawei Cloud Computing Technologies Co., Ltd., Guiyang, Guizhou 550025 (CN)
(72) Inventor: LIN, Weibo, Guiyang, Guizhou 550025 (CN); LI, Jun, Guiyang, Guizhou 550025 (CN); LIU, Boyang, Guiyang, Guizhou 550025 (CN)
(74) Representative: Goddar, Heinz J.
(86) International application number: PCT/CN2024/074419
(87) International publication number: WO 2024/164865

(57) **Abstract**

A cloud computing technology-based access control method is provided, and includes: A request initiator deployed on a cloud sends an access request to a third-party service. The access request carries subject attribute information and environment attribute information of the request initiator, the subject attribute information indicates identity information of the request initiator on the cloud, and the environment attribute information indicates environment information of the request initiator on the cloud. The third-party service receives the access request. The third-party service extracts the subject attribute information and the environment attribute information from the access request, where the subject attribute information and the environment attribute information are used for calculation based on an access control policy, to determine that the third-party service allows or rejects the access request. In the access control method provided in this application, a subject attribute and an environment attribute on the cloud are sent to the external third-party service, so that the third-party service obtains the subject attribute and the environment attribute of the request initiator on the cloud, to implement an attribute-based access control capability of the third-party service.

## Description

This application claims priorities to Chinese Patent Application No. 202310100829.8, filed on February 9, 2023 and entitled "ATTRIBUTE-BASED ACCESS CONTROL METHOD AND APPARATUS", and to Chinese Patent Application No. 202310594201.8, filed on May 24, 2023 and entitled "CLOUD COMPUTING TECHNOLOGY-BASED ACCESS CONTROL METHOD AND APPARATUS", both of which are incorporated herein by reference in their entireties.

### TECHNICAL FIELD

This application relates to the field of cloud computing technologies, and in particular, to a cloud computing technology-based access control method and apparatus.

### BACKGROUND

As cloud users (such as public cloud users, private cloud users, and hybrid cloud users) have increasing requirements for data and operation security on a cloud, most mainstream cloud vendors start to provide attribute-based access control (attribute-based access control, ABAC) capabilities for the users, so that the users can formulate dynamic, context-aware, and risk-controllable access control rules for cloud data and resources. Attribute-based access control is considered as a "next-generation" access control authorization model.

In attribute-based access control, a service end needs to obtain attribute information in an access request, and then can perform access control based on the attribute information in the access request. However, in a scenario in which a service end that requests to perform accessing is a third-party service, it is usually difficult for the third-party service to obtain the attribute information (for example, a subject attribute and an environment attribute) in the access request.

### SUMMARY

Embodiments of this application provide a cloud computing technology-based access control method. A subject attribute and an environment attribute on a cloud are sent to an external third-party service, so that the third-party service obtains the subject attribute and the environment attribute of a request initiator on the cloud, and the third-party service performs, based on a plurality of attributes, access control on a request initiated by the request initiator.

According to a first aspect, this application provides a cloud computing technology-based access control method, including: A request initiator (for example, a client deployed at a remote end) sends an access request to a third-party service. The access request carries subject attribute information and environment attribute information of the request initiator, the request initiator is deployed on a cloud, the subject attribute information indicates identity information of the request initiator on the cloud, and the environment attribute information indicates environment information of the client on the cloud. The third-party service receives the access request. The third-party service extracts the subject attribute information and the environment attribute information from the access request. The subject attribute information and the environment attribute information are used for calculation based on an access control policy, to determine that the third-party service allows or rejects the access request.

According to the cloud computing technology-based access control method provided in this application, the attribute information (for example, a subject attribute and an environment attribute) of the request initiator on the cloud is carried in the access request and sent to the third-party service. After receiving the access request, the third-party service parses and extracts the access request to obtain the subject attribute and the environment attribute in the access request. This resolves a problem that the third-party service cannot collect the subject attribute and the environment attribute of the request initiator on the cloud, and can implement an access control capability based on a plurality of attributes in the access request.

In a possible implementation, the cloud computing technology-based access control method provided in this application further includes: The request initiator sends a first request to an attribute token issuance service. The first request carries an identity credential of the request initiator on the cloud. The attribute token issuance service issues attribute token data to the request initiator in response to the first request after verification of the identity credential succeeds. The attribute token data includes the subject attribute information and the environment attribute information. The access request sent by the request initiator to the third-party service carries the attribute token data.

An attribute token issuance service provided by the cloud issues attribute token data including the subject attribute and the environment attribute of the request initiator on the cloud. The attribute token data may be, for example, JWT (json web token) data. The access request sent by the request initiator to the third-party service carries the attribute token data. The third-party service parses the attribute token data to obtain the subject attribute and the environment attribute.

In a possible implementation, a specific implementation in which the third-party service extracts the subject attribute information and the environment attribute information from the access request is as follows: The third-party service verifies the attribute token data, and parses the attribute token data if verification succeeds, to obtain the subject attribute information and the environment attribute information.

For example, after receiving the access request, the third-party service extracts the attribute token data, for example, a JWT, carried in the access request, and then verifies a JWT signature based on a CA root certificate (for example, an x509 root certificate) of the attribute token issuance service, to ensure authenticity and integrity of JWT content. After verification succeeds, the third-party service parses the JWT to obtain the subject attribute and the environment attribute in the access request for subsequent access control verification.

In another possible implementation, the cloud computing technology-based access control method provided in this application further includes: The attribute token issuance service receives configuration information entered by a user. The configuration information is used to configure a subject attribute included in the subject attribute information and an environment attribute included in the environment attribute information. The attribute token issuance service issues the token data to the request initiator based on the configuration information.

The user can configure, on a configuration page, specified attributes that need to be included in the attribute token data issued by the attribute token issuance service, for example, specified attribute entries that need to be included in the subject attribute and specified attribute entries that need to be included in the environment attribute.

For example, in a subsequently issued attribute token selected by the user on the configuration page, an attribute entry included in a subject attribute is a cloud identity ID, an account ID to which the identity belongs, and an organization ID to which the identity belongs, and the environment attribute includes an ID of a VPC of a request source, a VPC source IP of the request source, and a trusted execution environment proof of the request source. Therefore, in the attribute token data issued by the attribute token issuance service, the subject attribute information includes a cloud identity ID of an access request initiator, an account ID to which the identity belongs, and an organization ID to which the identity belongs, and the environment attribute information includes the ID of the VPC of the request source, the VPC source IP of the request source, and the trusted execution environment proof of the request source.

Optionally, the subject attribute information includes one or more of an identity of the request initiator on the cloud, an account to which the identity belongs, and an organization to which the identity belongs; and the environment attribute information includes one or more of an identifier of a network of the request initiator on the cloud, an IP address of the network, and an execution environment in which the client is located.

In another possible implementation, the cloud computing technology-based access control method provided in this application further includes: The third-party service sends an authentication request to an authentication service on the cloud. The authentication request carries the subject attribute information and the environment attribute information. The authentication service performs, in response to the authentication request, authentication calculation based on the subject attribute information, the environment attribute information, and the access control policy configured for the third-party service, to obtain an authentication result. The authentication service sends the authentication result to the third-party service. The third-party service rejects or allows the access request based on the authentication result.

In this possible implementation, ABAC-based authentication for the third-party service is integrated into the authentication service on the cloud, and attribute collection, access control rule configuration, and authentication verification capabilities are provided for the third-party service in an end-to-end manner, to implement consistent access control experience of the third-party service and the cloud service.

According to a second aspect, this application further provides a cloud computing technology-based access control apparatus, applied to a request initiator. The request initiator is a subject deployed on a cloud, and the apparatus includes an obtaining module and a sending module. The obtaining module is configured to obtain subject attribute information and environment attribute information of the request initiator. The subject attribute information indicates identity information of the request initiator on the cloud, and the environment attribute information indicates environment information of the request initiator on the cloud. The sending module is configured to send an access request to a third-party service. The access request carries the subject attribute information and the environment attribute information, so that after receiving the access request, the third-party service extracts the subject attribute information and the environment attribute information from the access request. The subject attribute information and the environment attribute information are used for calculation based on an access control policy, to determine that the third-party service allows or rejects the access request.

In a possible implementation, the obtaining module is specifically configured to: send a first request to an attribute token issuance service, where the first request carries an identity credential of the request initiator on the cloud; and receive attribute token data issued by the attribute token issuance service in response to the first request after verification of the identity credential succeeds, where the attribute token data includes the subject attribute information and the environment attribute information. The access request sent to the third-party service carries the attribute token data.

Optionally, the subject attribute information includes one or more of an identity of the request initiator that sends the access request on the cloud, an account to which the identity belongs, and an organization to which the identity belongs; and the environment attribute information includes one or more of an identifier of a network of the request initiator on the cloud, an IP address of the network, and an execution environment in which the request initiator is located.

According to a third aspect, this application further provides a cloud computing technology-based access control apparatus, applied to a third-party service end. The apparatus includes a receiving module and an extraction module. The receiving module is configured to receive an access request sent by a request initiator. The access request carries subject attribute information and environment attribute information of the request initiator, the request initiator is deployed on a cloud, the subject attribute information indicates identity information of the request initiator on the cloud, and the environment attribute information indicates environment information of the request initiator on the cloud. The extraction module is configured to extract the subject attribute information and the environment attribute information from the access request. The subject attribute information and the environment attribute information are used for calculation based on an access control policy, to determine that the third-party service allows or rejects the access request.

In another possible implementation, the cloud computing technology-based access control apparatus provided in this application further includes a verification module. The verification module is configured to: verify attribute token data, and parse the attribute token data if verification succeeds, to obtain the subject attribute information and the environment attribute information. The attribute token data is token data issued by an attribute token issuance service on the cloud for the subject attribute information and the environment attribute information, and the attribute token data includes the subject attribute information and the environment attribute information.

In another possible implementation, the cloud computing technology-based access control apparatus provided in this application further includes a sending module and an access control module. The sending module is configured to send an authentication request to an authentication service on the cloud. The authentication request carries the subject attribute information and the environment attribute information. The receiving module is further configured to receive an authentication result. The authentication result is an authentication result obtained by performing, by the authentication service in response to the authentication request, authentication calculation based on the subject attribute information, the environment attribute information, and the access control policy configured for the third-party service end. The access control module is configured to reject or allow the access request based on the authentication result.

Optionally, the subject attribute information includes one or more of an identity of the request initiator on the cloud, an account to which the identity belongs, and an organization to which the identity belongs; and the environment attribute information includes one or more of an identifier of a network of the request initiator on the cloud, an IP address of the network, and an execution environment in which the request initiator is located.

According to a fourth aspect, this application further provides a cloud computing technology-based access control apparatus, applied to a cloud management platform. The apparatus includes a receiving module and an issuance module. The receiving module is configured to receive a first request sent by a request initiator. The first request carries an identity credential of the request initiator on a cloud. The issuance module is configured to issue attribute token data to the request initiator in response to the first request after verification of the identity credential succeeds, where the attribute token data includes subject attribute information and environment attribute information, so that an access request sent by the request initiator to a third-party service carries the attribute token data. The subject attribute information indicates identity information of the request initiator on the cloud, and the environment attribute information indicates environment information of the request initiator on the cloud.

In a possible implementation, the receiving module is further configured to receive configuration information entered by a user. The configuration information is used to configure a subject attribute included in the subject attribute information and an environment attribute included in the environment attribute information. The cloud computing technology-based access control apparatus provided in this application further includes a configuration module. The configuration module is configured to configure, based on the configuration information, the attribute information included in the token data issued to the request initiator.

In another possible implementation, the receiving module is further configured to receive an authentication request sent by the third-party service. The authentication request carries the subject attribute information and the environment attribute information. The cloud computing technology-based access control apparatus provided in this application further includes an authentication module and a sending module. The authentication module is configured to perform, in response to the authentication request, authentication calculation based on the subject attribute information, the environment attribute information, and the access control policy configured for the third-party service, to obtain an authentication result. The sending module is configured to send the authentication result to the third-party service, so that the third-party service rejects or allows the access request based on the authentication result.

In an example, the subject attribute information includes one or more of an identity of the request initiator on the cloud, an account to which the identity belongs, and an organization to which the identity belongs; and the environment attribute information includes one or more of an identifier of a network of the request initiator on the cloud, an IP address of the network, and an execution environment in which the request initiator is located.

According to a fifth aspect, this application provides a computing device, including a memory and a processor. The memory stores executable code, and the processor executes the executable code to implement the method provided in the first aspect of this application.

According to a sixth aspect, this application provides a computing device cluster. The computing device cluster includes at least one computing device, each computing device includes a processor and a memory, the memory is configured to store instructions, and the processor is configured to enable, based on the instructions, the computing device cluster to perform the method according to the first aspect.

According to a seventh aspect, this application provides a computer-readable storage medium. The computer-readable storage medium stores a computer program, and when the computer program is executed on a computer, the computer is enabled to perform the method provided in the first aspect of this application.

According to an eighth aspect, this application provides a computer program or a computer program product. The computer program or the computer program product includes instructions, and when the instructions are executed, the method provided in the first aspect of this application is implemented.

### BRIEF DESCRIPTION OF DRAWINGS

FIG. 1 is a diagram of an implementation of attribute-based access control in a scenario in which a service end that requests to perform accessing is a cloud service;
FIG. 2 is a diagram of implementing attribute-based access control by using a verified permissions service in a scenario in which a service end that requests to perform accessing is a third-party service;
FIG. 3 is a diagram of an application scenario of a cloud computing technology-based access control method according to an embodiment of this application;
FIG. 4 is a diagram of a specific implementation in which token issuance and access request transmission are implemented through interaction between a client, an attribute token issuance service, and a third-party service;
FIG. 5 is a flowchart of a cloud computing technology-based access control method according to an embodiment of this application;
FIG. 6 is a diagram of a structure of a cloud computing technology-based access control apparatus according to an embodiment of this application;
FIG. 7 is a diagram of a structure of a computing device according to an embodiment of this application;
FIG. 8 is a diagram of a computing device cluster according to an embodiment of this application; and
FIG. 9 is a diagram of an application scenario of the computing device cluster provided in FIG. 8.

### DESCRIPTION OF EMBODIMENTS

The following clearly and completely describes technical solutions in embodiments of this application with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Some terms and related technologies in this application are first described with reference to accompanying drawings, to help a person skilled in the art have a better understanding.

A cloud technology (cloud technology) is a hosting service that integrates a series of resources such as hardware, software, and a network in a wide area network or a local area network to implement data calculation, memory, processing, and sharing.

A public cloud (public cloud) is an available cloud that is provided by a third-party provider for a user. The public cloud may be usually used over a network, and may be free or at low costs. This type of cloud has many instances, which can provide services across an open public network.

Private cloud (private cloud): A cloud infrastructure and software and hardware resources are created in a firewall, so that an institution or each department of an enterprise shares resources in a data center. The private cloud is a cloud infrastructure that operates for a specific organization. A manager may be the organization or a third party. The private cloud may be located inside the organization or outside the organization.

A hybrid cloud (hybrid cloud) is a cloud computing environment including a private cloud resource and a public cloud resource.

A request attribute is an attribute carried in a request initiated inside a cloud or outside a cloud, and may be classified into four types: a subject (subject) attribute, an object (object) attribute, an action (action) attribute, and an environment (environment) attribute. These attributes may be used to implement attribute-based access control.

For an access control model, role-based access control (role-based access control, RBAC) is the most familiar or is implemented in most cases. In role-based access control, access control is performed by granting different permissions to different roles. A subject (usually a person in an organization or a client) may have a plurality of roles to cope with different operation permissions. For example, Wang is a sales manager and a member of a technical committee, and is granted with two roles: a sales manager role and a technical team member role. Permissions corresponding to the two roles are as follows: The sales manager role may view and modify all sales data, or the like, while the technical team member role can only view a technical document. An administrator modifies permissions corresponding to different roles, to implement access control. For example, when Wang focused on a technical research, the sales manager role of Wang is removed. In this case, Wang cannot access sales-related data.

Role-based access control is useful in most scenarios. For example, a system is oriented to a place such as a sales company or a school with a very strict organization architecture. However, in some complex scenarios, role-based access control is gradually insufficient. In role-based access control, many virtual roles are generated, and it is difficult to manage and control. For example, in a medical institution, if it is expected to control a nurse to access only patient information for which the nurse is responsible in a department, the role of the nurse cannot be directly used. A role at a finer granularity needs to be used for classification for Zhang and Wang. In this case, roles that do not correspond to reality are generated, for example, Zhang's nurse and Wang's nurse. In a scenario such as a hospital in which people move frequently, frequently creating and destroying a role easily cause a problem, and it is also difficult to manage a role that does not match reality.

In another case, if an administrator considers security and privacy of medical data, and does not want a nurse to access patient information after leaving the hospital, it becomes more difficult. A common policy is to perform processing at a bottom network layer to prohibit all access outside the hospital. However, many enterprises usually require that internal resources can still be accessed through a VPN. However, it is still expected to implement precise control based on a location. For example, reading an email is allowed, but reading financial data is disallowed. In role-based access control, a virtual role may be used for controlling. For example, after work, an out of office (out of office) role is given, and then a minimum permission is granted to the role. This requires a virtual role and a large amount of dynamic control.

Therefore, more refined access control is required to match a complex service scenario. In addition, it is expected that such a new access control model is easy to understand and implement and is also conducive to control and operation and maintenance. One solution is attribute-based access control. In brief, attribute-based access control can be understood as performing calculation based on an access control policy and based on a plurality of attributes in an access request, and determining, based on a calculation result, whether a user can access a resource.

In attribute-based access control, the attributes in the access request usually include four types of attributes, for example, a subject attribute, an object attribute, an operation attribute, and an environment attribute.

The subject attribute is usually a person who uses the system or another user (non-person, NPE), for example, a client program or a device. Certainly, the subject attribute may include a plurality of attributes such as an identity of a subject and an organization to which the subject belongs.

The object attribute indicates a resource that requires access control management, for example, is any resource attribute that requires access control, for example, a file, a record, a machine, or a website. Therefore, sometimes, the object attribute may also be referred to as a resource attribute. The object attribute can also include a plurality of attributes such as a table of a wombat group or an online instance of a Locke group.

The operation attribute indicates an operation that needs to be performed by a subject on an object, for example, viewing a record, logging in to a server, using a SaaS service to perform reimbursement, or viewing a job of a candidate. The operation attribute usually includes read, write, modify, copy, and the like. Usually, the operation attribute is expressed in the access request, for example, an HTTP method.

The environment attribute indicates a context of an operation or a situation when a current access request occurs. The environment attribute is usually used to describe an environment feature, is independent of the subject attribute and the object attribute, and is usually used to describe a system condition, for example, time, a current security level, a production environment, or a test environment.

An attribute-based access control policy is a relationship representation of determining, based on all the plurality of attributes in the access request such as the subject attribute, the object attribute, the operation attribute, and environment attribute, whether an access request initiated by a subject can be allowed. For example, the access control policy may be expressed in a human language as that only a person in the wombat group can access these servers, or only a person in an office can access these resources.

Especially, in the field of cloud computing technologies, for example, on a public cloud, cloud resources are leased. A tenant may dynamically expand or reduce leased cloud resources based on a requirement of the tenant. In this scenario, resources are dynamic and change greatly (an instance may be dynamically started or closed based on traffic). In this case, access control at a fine granularity is required. Role-based access control cannot meet access control in a cloud computing scenario. In this case, attribute-based access control is required.

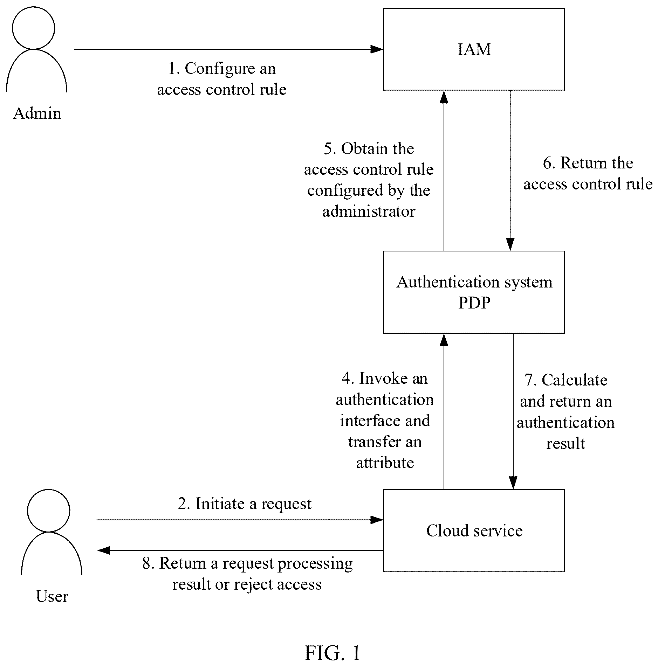

For a scenario in which a service end that requests to perform accessing is a cloud service, most existing cloud vendors provide a user with an attribute-based access control capability for a cloud resource through identity and access management (identity and access management, IAM). As shown in FIG. 1, a user who is an administrator may configure an access control rule in an IAM service. When a common user initiates a request for accessing data or operating a resource to a cloud service, the cloud service extracts four types of attributes from the request and transfers the four types of attributes to an IAM authentication service. The IAM authentication service calculates, based on an access control policy (the access control policy includes several access control rules) configured by the administrator and the attributes in the request, whether to allow or reject the request initiated by the user, and returns a result to the cloud service. The cloud service actually executes an authentication result, and processes or blocks the request.

For a scenario in which a service end that requests to perform accessing is an external third-party service, an access control capability currently provided by each cloud vendor is weak.

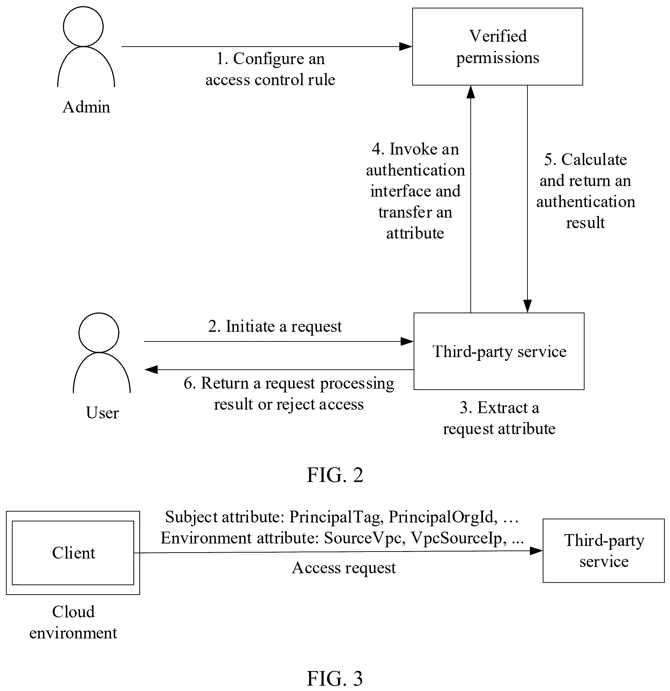

One solution is to provide a verified permissions service to open an access control rule configuration capability and an authentication capability of IAM to a third-party service. A user may configure an access control rule in the verified permissions service. The third-party service is responsible for collecting all request attributes and invoking an authentication interface of the verified permissions service (refer to FIG. 2).

However, in the solution of the verified permissions service, work of collecting the request attributes is completely handed over to the third-party service, in other words, needs to be developed by the user. There is a question of how to ensure that all the attributes are collected in a trusted and tamper-proofing manner.

Then, attributes that may be provided on a cloud are not integrated in the solution provided by the verified permissions service. Currently, a large quantity of application clients of the user are deployed on the cloud (through a cloud server, a container, function computing, or the like), and an identity credential on the cloud is used. For a request initiated by such clients, a subject attribute and a part of environment attributes in the request can only be collected and provided by the cloud. The third-party service of the user cannot collect the attributes.

For the foregoing problem, embodiments of this application provide a cloud computing technology-based access control method. A subject attribute and an environment attribute of a request initiator (for example, a client deployed on a cloud) on the cloud are integrated into an access request, and are sent to a third-party service together. The third-party service obtains the subject attribute and the environment attribute in the access request through attribute extraction, to facilitate subsequent attribute-based access control.

The cloud computing technology-based access control method provided in embodiments of this application may be applied to a scenario in which the access request is sent from the cloud to the third-party service, so that the third-party service can obtain the subject attribute of the request initiator on the cloud and the environment attribute of the request initiator on the cloud, and the third-party service implements an attribute-based access control capability. The cloud can be a public cloud, a private cloud, or a hybrid cloud.

The following describes, by using the public cloud as an example, the cloud computing technology-based access control method provided in embodiments of this application.

The request initiator may be any subject on the public cloud, for example, may be a client or an instance machine deployed on the public cloud.

The third-party service may be a service that is on the public cloud and that is provided for a third party, or may be a service that is outside the public cloud and that is provided for a third party.

FIG. 3 shows an application scenario of a cloud computing technology-based access control method according to an embodiment of this application. As shown in FIG. 3, a client deployed in a cloud environment sends an access request to a third-party service. The access request carries a subject attribute of the client on a cloud and an environment attribute of the client on the cloud. The third-party service may extract the subject attribute and the environment attribute in the access request from the access request, to facilitate subsequent attribute-based access control.

It should be explained that, the client herein is not a client that is usually understood to be deployed on a terminal and directly interact with a person, but a client deployed on a public cloud, is an IT infrastructure type, and is a client relative to a database, network storage (for example, cloud storage data or cloud database data deployed on the cloud), and the like. The client analyzes and processes data in the database or the network storage, and then provides the data to a terminal program.

The third-party service is a service (for example, a cloud computing service, a cloud storage service, or a cloud database service) provided by a third party relative to a cloud vendor, namely, a non-public cloud for a tenant. The third-party service is a service provided by the third party other than the cloud vendor. For example, the tenant deploys an application service for a user of the tenant on the cloud.

A deployment location of the third-party service is not specifically limited in this embodiment of this application. For example, the third-party service and the client may be deployed on a same public cloud, or may be deployed on different public clouds, or may be deployed on a private cloud, or may be deployed in a non-cloud environment.

Because the subject attribute and environment data in the access request do not change with a to-be-accessed service, the subject attribute and the environment data may be extracted in a unified extraction manner, for example, may be extracted by a cloud management platform in a unified manner.

For example, the client sends an attribute obtaining request to the cloud management platform. After receiving the obtaining request, the cloud management platform extracts the subject attribute and the environment attribute of the client in response to the obtaining request, and returns the subject attribute and the environment attribute of the client to the client. In this way, the client obtains the subject attribute and the environment attribute of the client, and the access request sent by the client to the third-party service carries the subject attribute and the environment attribute.

To ensure integrity and reliability of the subject attribute and the environment attribute that are sent by the client to the third-party service, the subject attribute and the environment attribute may be signed. After receiving the access request, the third-party service verifies a signature when extracting the subject attribute and the environment attribute. After verification of the signature succeeds, authenticity and integrity of the subject attribute and the environment attribute are confirmed, and then the subject attribute and the environment attribute are obtained through parsing.

For example, the cloud management platform opens an attribute token issuance service to the client. The client deployed on the cloud may invoke, based on an identity credential, for example, an identity token (security token), an API of the attribute token issuance service to obtain attribute token data. The attribute token data may be JWT (json web token) data. The attribute token data records the subject attribute and the environment attribute of the client, for example, an identity tag and a trusted execution environment.

A software development kit (software development kit, SDK) of the client is integrated with the token issuance service. Before invoking the third-party service, the client obtains a JWT through the attribute token issuance service, and includes the JWT in a request for invoking the third-party service.

The third-party service is integrated with a JWT verification SDK. After receiving the JWT carried in the request, the third-party service verifies a JWT signature based on a CA root certificate (for example, an x509 root certificate) of the attribute token issuance service, to ensure authenticity and integrity of JWT content. After verification succeeds, the third-party service obtains, through parsing, the subject attribute and the environment attribute in the JWT for subsequent access control verification.

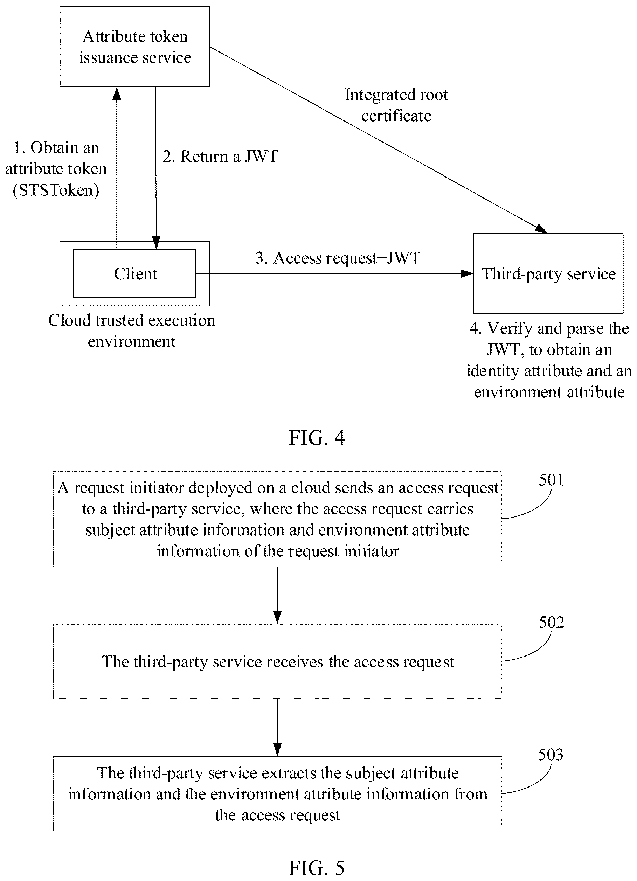

FIG. 4 shows a specific implementation in which token issuance and access request transmission are implemented through interaction between a client, an attribute token issuance service, and a third-party service.

The subject attribute may include a plurality of attribute entries such as a PrincipalId attribute entry, a PrincipalAccount attribute entry, and a PrincipalOrgID attribute entry. The environment attribute may also include a plurality of attribute entries such as a SourceVpc attribute entry, a VpcSourceIp attribute entry, and a RecipientAttestation attribute entry.

For meanings of the attribute entries of the subject attribute and the attribute entries of the environment attribute, refer to Table 1.

**Table 1**

| Attribute type | Attribute Name | Attribute meaning |
|---|---|---|
| Subject attribute | PrincipalId | Cloud identity ID |
| | PrincipalAccount | Account ID to which an identity belongs |
| | PrincipalOrgID | Organization ID to which the identity belongs |
| Environment attribute | SourceVpc | ID of of a VPC of a request source |
| | VpcSourceIp | VPC source IP of the request source |
| | RecipientAttestation | Trusted execution environment proof of the request source |

Further, the cloud tenant may further configure specified attributes included in the subject attribute and the environment attribute in the JWT issued by the attribute token issuance service.

For example, the cloud tenant enters or selects, on a configuration page of the attribute token issuance service, an attribute entry included in the attribute token data issued by the attribute token issuance service. For example, the configuration page of the attribute token issuance service displays the plurality of attribute entries of the subject attribute and the plurality of attribute entries of the environment attribute. The user selects a required attribute entry, to configure the attribute token data issued by the attribute token issuance service. The attribute token data issued by the attribute token issuance service includes the attribute entry selected by the user for configuration.

For example, if the tenant selects, on the configuration page of the attribute token issuance service, the PrincipalId attribute entry in the subject attribute and the SourceVpc attribute entry in the environment attribute, in the attribute token data subsequently issued by the attribute token issuance service to the client deployed by the tenant on the cloud, the subject attribute includes PrincipalId corresponding to the client, and the environment attribute includes SourceVpc corresponding to the client.

A possible implementation of the cloud computing technology-based access control method provided in this embodiment of this application is as follows: The client deployed by the tenant on the cloud initiates a request to the attribute token issuance service based on an IAM identity credential on the cloud, to obtain one piece of attribute token data. Optionally, the attribute token data is a JWT, and the JWT includes an attribute entry previously configured by the user in the attribute token issuance service. For example, the client is deployed in VPC aaa-bbb, a source IP address in a VPC is 172.0.0.2, and the client is in a trusted execution environment. The JWT issued by the attribute token issuance service includes attributes such as {"SourceVpc":"aaa-bbb", "VpcSourceIp":"172.0.0.2", "RecipientAttestation":"c5158cb6ee9dbb0ead648c3dc80e472c8"}.

After obtaining an attribute token, the client includes the token in the request for invoking the third-party service developed by the user. After obtaining the token, the third-party service verifies the token based on the CA root certificate of the attribute token issuance service, to ensure that the token is issued by the attribute token issuance service. After verification succeeds, the token is parsed to obtain an attribute in the token. For example, the third-party service may obtain information such as the VPC in which the client initiating the request is deployed on the cloud, the source IP address in the VPC, and whether the client is located in the trusted execution environment. Based on the information, the third-party service may perform access control on the request initiated by the client, for example, allow only the request initiated by the client in the trusted execution environment to pass.

In another example, a verified permissions service on the cloud can be further combined, to provide attribute collection, access control rule configuration, and authentication verification capabilities for the third-party service in an end-to-end manner, and implement consistent experience of the third-party service and the cloud service.

For example, after the third-party service obtains the subject attribute and the environment attribute in the access request, the third-party service sends an authentication request to an authentication service on the cloud. The authentication request carries the subject attribute and the environment attribute. The authentication service performs, in response to the authentication request, authentication calculation based on the subject attribute, the environment attribute, and the access control policy configured for the third-party service, to obtain an authentication result. The authentication service sends the authentication result to the third-party service. The third-party service rejects or allows the access request based on the authentication result.

To implement access control at a finer granularity, the third-party service may further analyze the access request, to obtain an operation attribute in the access request, and extract the object attribute that needs to be extracted by the access request. The third-party service sends the authentication request to the authentication service on the cloud. The authentication request carries four types of attributes: the subject attribute, the object attribute, the operation attribute, and the environment attribute. The authentication service performs, in response to the authentication request, authentication calculation based on the four types of attributes (that is, based on the subject attribute, the object attribute, the operation attribute, and the environment attribute) of the access request and the access control policy configured for the third-party service, to obtain an authentication result. The authentication service sends the authentication result to the third-party service. The third-party service rejects or allows the access request based on the authentication result.

FIG. 5 is a flowchart of a cloud computing technology-based access control method according to an embodiment of this application. As shown in FIG. 5, the method includes at least step S501 to step S503.

In step S501, a request initiator deployed on a cloud sends an access request to a third-party service, where the access request carries subject attribute information and environment attribute information of the request initiator.

The request initiator may be any subject deployed on the cloud, for example, may be a client or an instance machine deployed on the cloud.

The third-party service may be a service that is on a public cloud and that is provided for a third party, or may be a service that is outside a public cloud and that is provided for a third party.

For example, the request initiator is a client deployed on the cloud. When the client needs to invoke the third-party service, the client sends the access request to the third-party service. The access request carries a subject attribute and an environment attribute of the client.

The subject attribute indicates identity information of the client on the cloud. For example, the subject attribute may include one or more of an identity of the client on the cloud, an account to which the identity belongs, and an organization to which the identity belongs. The environment attribute indicates one or more of an identifier of a network of the client on the cloud, an IP address of the network, and an execution environment in which the request initiator is located.

Because the subject attribute and environment data of the client do not change with a to-be-accessed service, the subject attribute and the environment data may be extracted in a unified extraction manner, for example, may be extracted by a cloud management platform in a unified manner.

For example, the client sends an attribute obtaining request to the cloud management platform. After receiving the obtaining request, the cloud management platform extracts the subject attribute and the environment attribute of the client in response to the obtaining request, and returns the subject attribute and the environment attribute of the client to the client. In this way, the client obtains the subject attribute and the environment attribute of the client.

Certainly, the subject attribute and the environment attribute of the client may also be independently extracted. For example, an attribute extraction module is set in the client, and the attribute extraction module is configured to extract the subject attribute and the environment attribute of the client.

Further, to ensure integrity and reliability of the subject attribute and the environment attribute that are sent by the client to the third-party service, the subject attribute and the environment attribute may be signed.

For example, the cloud management platform opens an attribute token issuance service to the client. The client deployed on the cloud may invoke, based on an identity credential, for example, a security token, an API of the attribute token issuance service to obtain attribute token data. The attribute token data may be a JWT. The JWT records the subject attribute and the environment attribute of the client, for example, an identity tag and a trusted execution environment.

Optionally, the JWT issued by the attribute token issuance service may be further configured to specify specific attribute entries included in the subject attribute and the environment attribute in the JWT.

For example, a cloud tenant enters or selects, on a configuration page of the attribute token issuance service, an attribute entry included in the attribute token data issued by the attribute token issuance service. For example, the configuration page of the attribute token issuance service displays a plurality of attribute entries of the subject attribute and a plurality of attribute entries of the environment attribute. A user selects a required attribute entry, to configure the attribute token data issued by the attribute token issuance service. The attribute token data issued by the attribute token issuance service includes the attribute entry selected by the user for configuration.

For an attribute entry that may be configured in the subject attribute and the environment attribute on the configuration page, refer to Table 1.

In step S502, the third-party service receives the access request.

In step S503, the third-party service extracts the subject attribute information and the environment attribute information from the access request.

After receiving the access request, the third-party service extracts the subject attribute and the environment attribute that are carried in the access request.

When the access request carries the attribute token data, after receiving the access request, the third-party service extracts the attribute token data, and verifies the attribute token data based on a CA root certificate (for example, an x509 root certificate) of the attribute token issuance service, to ensure that the attribute token data is issued by the attribute token issuance service. After verification succeeds, the token is parsed to obtain an attribute in the token.

For example, the subject attribute in the attribute token data includes a cloud identity ID, and the environment attribute includes an ID of a VPC in which the client is located, a source IP address in the VPC, and whether the client is in a trusted execution environment. After the third-party service parses the attribute token data, the third-party service may learn of information such as the VPC in which the client is deployed on the cloud, the source IP address in the VPC, and whether the client is located in the trusted execution environment. Based on the information, the third-party service may perform access control on the request initiated by the client, for example, allow only the request initiated by the client in the trusted execution environment to pass.

In another example, an attribute-based authentication step may be implemented by using an authentication service on the cloud. For example, after the third-party service obtains the subject attribute and the environment attribute in the access request, the third-party service sends an authentication request to an authentication service on the cloud. The authentication request carries the subject attribute and the environment attribute. The authentication service performs, in response to the authentication request, authentication calculation based on the subject attribute, the environment attribute, and the access control policy configured for the third-party service, to obtain an authentication result. The authentication service sends the authentication result to the third-party service. The third-party service rejects or allows the access request based on the authentication result.

To implement access control at a finer granularity, the third-party service may further analyze the access request to obtain an operation attribute in the access request, and extract the object attribute that needs to be extracted by the access request.

The operation attribute is expressed in the access request. For example, the access request is analyzed, and a field that expresses the operation attribute is extracted, to obtain the operation attribute in the access request, for example, read, write, modify, and copy.

The object attribute, also referred to as a resource attribute, is an attribute of a resource in a to-be-accessed third-party service, for example, a tag of the resource in the to-be-accessed third-party service. The tag describes the attribute of the resource, for example, attribute information such as whether a data bucket in the to-be-accessed third-party service is encrypted.

After obtaining four types of attributes in the access request, the third-party service sends an authentication request carrying the four types of attribute information to the authentication service on the cloud. The authentication service performs, in response to the authentication request, authentication calculation based on the four types of attributes in the access request and the access control policy configured for the third-party service, to obtain an authentication result. The authentication service sends the authentication result to the third-party service. The third-party service rejects or allows the access request based on the authentication result.

In conclusion, according to the cloud computing technology-based access control method provided in this embodiment of this application, for a scenario in which a request subject on the cloud invokes the third-party service, the request subject on the cloud includes the subject attribute and the environment attribute in the access request to be sent to the third-party service, so that the third-party service can obtain a plurality of dimensions of subject attributes and a plurality of dimensions of environment attributes of a cloud subject, thereby implementing an access control capability based on a plurality of attributes.

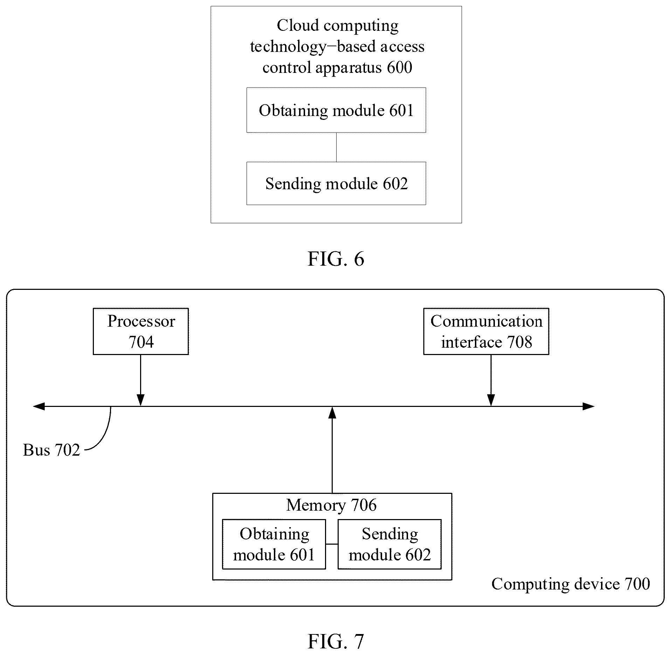

FIG. 6 is a diagram of a structure of a cloud computing technology-based access control apparatus according to an embodiment of this application. The cloud computing technology-based access control apparatus 600 is applied to a request initiator deployed on a cloud. As shown in FIG. 6, the cloud computing technology-based access control apparatus 600 includes an obtaining module 601 and a sending module 602. The obtaining module 601 is configured to obtain subject attribute information and environment attribute information of the request initiator. The subject attribute information indicates identity information of the request initiator on the cloud, and the environment attribute information indicates environment information of the request initiator on the cloud. The sending module is configured to send an access request to a third-party service. The access request carries the subject attribute information and the environment attribute information, so that after receiving the access request, the third-party service extracts the subject attribute information and the environment attribute information from the access request. The subject attribute information and the environment attribute information are used for calculation based on an access control policy, to determine that the third-party service allows or rejects the access request.

It may be understood that the obtaining module 601 and the sending module 602 of the cloud computing technology-based access control apparatus 600 may be distributed in different servers, or may be implemented by different modules in a server. This is not limited in this embodiment of this application.

Both the obtaining module 601 and the sending module 602 may be implemented by software, or may be implemented by hardware. For example, the following uses the obtaining module 601 as an example to describe an implementation of the obtaining module 601. Similarly, for an implementation of the sending module 602, refer to the implementation of the obtaining module 601.

The module is used as an example of a software functional unit, and the obtaining module 601 may include code run on a computing instance. The computing instance may include at least one of a physical host (computing device), a virtual machine, and a container. Further, there may be one or more computing instances. For example, the obtaining module 601 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The module is as an example of a hardware functional unit, and the obtaining module 601 may include at least one computing device like a server. Alternatively, the obtaining module 601 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 601 may be distributed in a same region, or may be distributed in different regions. The plurality of computing devices included in the obtaining module 601 may be distributed in a same AZ, or may be distributed in different AZs. Similarly, the plurality of computing devices included in the obtaining module 601 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the obtaining module 601 may be configured to perform any step in the cloud computing technology-based access control method, and the sending module 602 may be configured to perform any step in the cloud computing technology-based access control method. Steps that the obtaining module 601 and the sending module 602 are responsible for implementing may be specified based on a requirement, and the obtaining module 601 and the sending module 602 respectively implement different steps in the cloud computing technology-based access control method to implement all functions of the cloud computing technology-based access control apparatus.

This application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is indicated by using only one line in FIG. 7. However, it does not indicate that there is only one bus or only one type of bus. The bus 702 may include a path for transmitting information between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a mechanical hard disk drive (hard disk drive, HDD), or a solid-state drive (solid-state drive, SSD).

The memory 706 stores executable program code, and the processor 704 executes the executable program code to separately implement functions of the obtaining module 601 and the sending module 602, to implement the cloud computing technology-based access control method. In other words, the memory 706 stores instructions used to perform the cloud computing technology-based access control method.

The communication interface 708 is a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

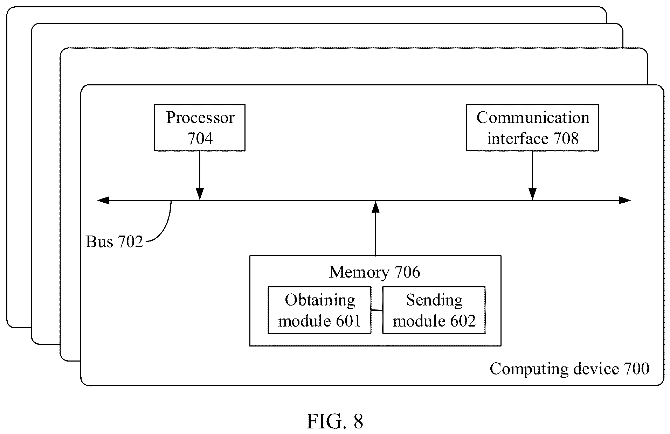

As shown in FIG. 8, the computing device cluster includes at least one computing device 700. The memory 706 in the one or more computing devices 700 in the computing device cluster may store same instructions used to perform the cloud computing technology-based access control method.

In some possible implementations, the memory 706 in the one or more computing devices 700 in the computing device cluster may also separately store a part of instructions used to perform the cloud computing technology-based access control method. In other words, a combination of the one or more computing devices 700 may jointly execute instructions used to perform the cloud computing technology-based access control method.

It should be noted that memories 706 in different computing devices 700 in the computing device cluster may store different instructions respectively used to perform a part of functions of the cloud computing technology-based access control apparatus. In other words, the instructions stored in the memories 706 in different computing devices 700 may implement functions of one or more of the obtaining module 601 and the sending module 602.

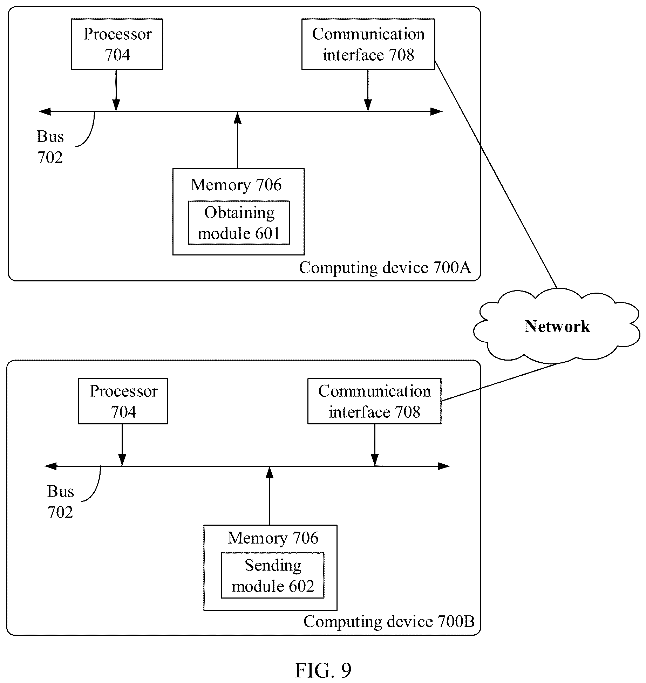

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, each computing device is connected to the network through a communication interface of the computing device. In this possible implementation, a memory 706 in the computing device 700A stores instructions for executing a function of the obtaining module 601. In addition, a memory 706 in the computing device 700B stores instructions for executing a function of the sending module 602.

It should be understood that functions of the computing device 700A shown in FIG. 9 may alternatively be completed by a plurality of computing devices 700. Similarly, functions of the computing device 700B may alternatively be completed by a plurality of computing devices 700.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the cloud computing technology-based access control method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the cloud computing technology-based access control method.

In the foregoing embodiments, descriptions of embodiments have respective focuses. For a part that is not described in detail or recorded in an embodiment, refer to related descriptions in other embodiments.

The foregoing describes basic principles of this application with reference to specific embodiments. However, it should be noted that, advantages, benefits, effects, and the like mentioned in this application are merely examples rather than limitations, and it cannot be considered that these advantages, benefits, effects, and the like are mandatory for embodiments of this disclosure. In addition, specific details disclosed above are merely intended for purpose of example and for ease of understanding, but are not intended for limitations. The foregoing details do not limit a case in which this disclosure needs to be implemented by using the foregoing specific details.

Block diagrams of the apparatus, the device, and the system in this disclosure are merely examples, and are not intended to require or imply that connections, arrangements, and configurations need to be performed in a manner shown in the block diagrams. A person skilled in the art will recognize that the component, the apparatus, the device, and the system may be connected, arranged, and configured in any manner. Words such as "include", "contain", and "have" are open words, refer to "including but not limited to", and may be used interchangeably. The terms "or" and "and" used herein refer to the terms "and/or", and may be interchangeably used, unless the context explicitly indicates otherwise. The word "such as" used herein refers to a phrase "such as but not limited to", and may be interchangeably used.

It should be further noted that in the apparatus, the device, and the method disclosed in this disclosure, the components or the steps may be decomposed and/or recombined. The decomposition and/or recombination should be considered as equivalent solutions of this disclosure.

The foregoing descriptions have been provided for the purpose of illustration and descriptions. In addition, the descriptions are not intended to limit embodiments of this disclosure to the form disclosed herein. Although a plurality of example aspects and embodiments have been discussed above, a person skilled in the art will recognize some of their variations, modifications, changes, additions, and sub-combinations.

It may be understood that various numbers in embodiments of this application are merely used for differentiation for ease of description, and are not used to limit the scope of embodiments of this application.

A person of ordinary skill in the art may be further aware that, in combination with the examples described in embodiments disclosed in this specification, units and algorithm steps may be implemented by electronic hardware, computer software, or a combination of the two. To clearly describe interchangeability between the hardware and the software, compositions and steps of each example have generally been described in the foregoing descriptions based on functions. Whether these functions are performed in a hardware manner or a software manner depends on a particular application and a design constraint condition of the technical solutions. A person of ordinary skill in the art may use different methods to implement the described functions for each particular application, but it should not be considered that the implementation goes beyond the scope of this application.

The steps of the methods or algorithms described in the embodiments disclosed in this specification may be implemented by hardware and a software module executed by the processor or a combination of hardware and a software module executed by the processor. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

## Claims

1. A cloud computing technology-based access control method, comprising:
sending, by a request initiator, an access request to a third-party service, wherein the access request carries subject attribute information and environment attribute information of the request initiator, the request initiator is deployed on a cloud, the subject attribute information indicates identity information of the request initiator on the cloud, and the environment attribute information indicates environment information of the request initiator on the cloud;
receiving, by the third-party service, the access request; and
extracting, by the third-party service, the subject attribute information and the environment attribute information from the access request, wherein the subject attribute information and the environment attribute information are used for calculation based on an access control policy, to determine that the third-party service allows or rejects the access request.

2. The method according to claim 1, further comprising:
sending, by the request initiator, a first request to an attribute token issuance service, wherein the first request carries an identity credential of the request initiator on the cloud; and
issuing, by the attribute token issuance service, attribute token data to the request initiator in response to the first request after verification of the identity credential succeeds, wherein the attribute token data comprises the subject attribute information and the environment attribute information, wherein
the access request sent by the request initiator to the third-party service carries the attribute token data.

3. The method according to claim 2, wherein extracting, by the third-party service, the subject attribute information and the environment attribute information from the access request comprises:
verifying, by the third-party service, the attribute token data, and parsing the attribute token data if verification succeeds, to obtain the subject attribute information and the environment attribute information.

4. The method according to claim 2 or 3, further comprising:
receiving, by the attribute token issuance service, configuration information entered by a user, wherein the configuration information is used to configure a subject attribute comprised in the subject attribute information and an environment attribute comprised in the environment attribute information; and
configuring, by the attribute token issuance service based on the configuration information, the attribute information comprised in the token data issued to the request initiator.

5. The method according to any one of claims 1 to 4, wherein the subject attribute information comprises one or more of an identity of the request initiator on the cloud, an account to which the identity belongs, and an organization to which the identity belongs; and
the environment attribute information comprises one or more of an identifier of a network of the request initiator on the cloud, an IP address of the network, and an execution environment in which the request initiator is located.

6. The method according to any one of claims 1 to 5, further comprising:
sending, by the third-party service, an authentication request to an authentication service on the cloud, wherein the authentication request carries the subject attribute information and the environment attribute information;
performing, by the authentication service in response to the authentication request, authentication calculation based on the subject attribute information, the environment attribute information, and the access control policy configured for the third-party service, to obtain an authentication result;
sending, by the authentication service, the authentication result to the third-party service; and
rejecting or allowing, by the third-party service, the access request based on the authentication result.

7. A cloud computing technology-based access control apparatus, applied to a request initiator, wherein the request initiator is a subject deployed on a cloud, and the apparatus comprises:
an obtaining module, configured to obtain subject attribute information and environment attribute information of the request initiator, wherein the subject attribute information indicates identity information of the request initiator on the cloud, and the environment attribute information indicates environment information of the request initiator on the cloud; and
a sending module, configured to send an access request to a third-party service, wherein the access request carries the subject attribute information and the environment attribute information, so that after receiving the access request, the third-party service extracts the subject attribute information and the environment attribute information from the access request, wherein the subject attribute information and the environment attribute information are used for calculation based on an access control policy, to determine that the third-party service allows or rejects the access request.

8. The apparatus according to claim 7, wherein the obtaining module is specifically configured to:
send a first request to an attribute token issuance service, wherein the first request carries an identity credential of the request initiator on the cloud; and receive attribute token data issued by the attribute token issuance service in response to the first request after verification of the identity credential succeeds, wherein the attribute token data comprises the subject attribute information and the environment attribute information, wherein
the access request sent to the third-party service carries the attribute token data.

9. The apparatus according to claim 7 or 8, wherein the subject attribute information comprises one or more of an identity of the request initiator on the cloud, an account to which the identity belongs, and an organization to which the identity belongs; and
the environment attribute information comprises one or more of an identifier of a network of the request initiator on the cloud, an IP address of the network, and an execution environment in which the request initiator is located.

10. A cloud computing technology-based access control apparatus, applied to a third-party service end, and comprising:
a receiving module, configured to receive an access request sent by a request initiator, wherein the access request carries subject attribute information and environment attribute information of the request initiator, the request initiator is deployed on a cloud, the subject attribute information indicates identity information of the request initiator on the cloud, and the environment attribute information indicates environment information of the request initiator on the cloud; and
an extraction module, configured to extract the subject attribute information and the environment attribute information from the access request, wherein the subject attribute information and the environment attribute information are used for calculation based on an access control policy, to determine that the third-party service allows or rejects the access request.

11. The apparatus according to claim 10, further comprising:
a verification module, configured to: verify attribute token data, and parse the attribute token data if verification succeeds, to obtain the subject attribute information and the environment attribute information, wherein
the attribute token data is token data issued by an attribute token issuance service on the cloud for the subject attribute information and the environment attribute information, and the attribute token data comprises the subject attribute information and the environment attribute information.

12. The apparatus according to claim 10 or 11, further comprising:
a sending module, configured to send an authentication request to an authentication service on the cloud, wherein the authentication request carries the subject attribute information and the environment attribute information, wherein
the receiving module is further configured to receive an authentication result, wherein the authentication result is an authentication result obtained by performing, by the authentication service in response to the authentication request, authentication calculation based on the subject attribute information, the environment attribute information, and the access control policy configured for the third-party service end; and
an access control module, configured to reject or allow the access request based on the authentication result.

13. The apparatus according to any one of claims 10 to 12, wherein the subject attribute information comprises one or more of an identity of the request initiator on the cloud, an account to which the identity belongs, and an organization to which the identity belongs; and
the environment attribute information comprises one or more of an identifier of a network of the request initiator on the cloud, an IP address of the network, and an execution environment in which the request initiator is located.

14. A cloud computing technology-based access control apparatus, applied to a cloud management platform, and comprising:
a receiving module, configured to receive a first request sent by a request initiator, wherein the first request carries an identity credential of the request initiator on the cloud; and
an issuance module, configured to issue attribute token data to the request initiator in response to the first request after verification of the identity credential succeeds, wherein the attribute token data comprises subject attribute information and environment attribute information, so that an access request sent by the request initiator to a third-party service carries the attribute token data, wherein
the subject attribute information indicates identity information of the request initiator on the cloud, and the environment attribute information indicates environment information of the request initiator on the cloud.

15. The apparatus according to claim 14, wherein the receiving module is further configured to receive configuration information entered by a user, wherein the configuration information is used to configure a subject attribute comprised in the subject attribute information and an environment attribute comprised in the environment attribute information; and
the apparatus further comprises:
a configuration module, configured to configure, based on the configuration information, the attribute information comprised in the token data issued to the request initiator.

16. The apparatus according to claim 14 or 15, wherein the receiving module is further configured to receive an authentication request sent by the third-party service, wherein the authentication request carries the subject attribute information and the environment attribute information; and
the apparatus further comprises:
an authentication module, configured to perform, in response to the authentication request, authentication calculation based on the subject attribute information, the environment attribute information, and the access control policy configured for the third-party service, to obtain an authentication result; and
a sending module, configured to send the authentication result to the third-party service, so that the third-party service rejects or allows the access request based on the authentication result.

17. The apparatus according to any one of claims 14 to 16, wherein the subject attribute information comprises one or more of an identity of the request initiator on the cloud, an account to which the identity belongs, and an organization to which the identity belongs; and
the environment attribute information comprises one or more of an identifier of a network of the request initiator on the cloud, an IP address of the network, and an execution environment in which the request initiator is located.

18. A computing device cluster, wherein the computing device cluster comprises at least one computing device, and each computing device comprises a processor and a memory;
the memory is configured to store instructions; and
the processor is configured to enable, based on the instructions, the computing device cluster to perform the method according to any one of claims 1 to 6.

19. A computer-readable storage medium, wherein the computer-readable storage medium stores a computer program, and when the computer program is executed by a processor, the method according to any one of claims 1 to 6 is implemented.

20. A computer program product comprising instructions, wherein when the computer program product runs on a computing device, the computing device is enabled to perform the method according to any one of claims 1 to 6.
